# EUROPÄISCHE PATENTANMELDUNG

(11) **EP 3 440 910 A1**
(43) Veröffentlichungstag der Anmeldung: **13.02.2019**
(21) Anmeldenummer: 18401069.2
(22) Anmeldetag: 01.08.2018
(51) Int. Cl.: A01C 7/08, A01C 19/02

(54) **SYSTEM ZUM VERTEILEN VON SAATGUT IN EINER SÄMASCHINE**

(30) Priorität: 08.08.2017 DE 102017117972
(71) Anmelder: Amazonen-Werke H. Dreyer GmbH & Co. KG, 49205 Hasbergen (DE)
(72) Erfinder: Johannaber, Stefan Jan, 49536 Lienen (DE); Wiebusch, Thorsten, 49205 Hasbergen (DE); Teckemeyer, Stephan, 49504 Lotte (DE); Meyer, Lars, 49733 Haren/Ems (DE)

(57) **Zusammenfassung**

System (1) zum Verteilen von Saatgut (2) in einer SämaschineBeschrieben wird ein System (1) zum Verteilen von Saatgut (2) aus einem zentralen Vorratsbehälter (3) einer Sämaschine auf zentralen Säaggregaten (6) zugeordnete Förderleitungen (5). Das System (1) umfasst ein Fallrohr (8) zum Zuführen des im Vorratsbehälter vorgehaltenen Saatguts (2) und einen dem Fallrohr (8) nachgeschalteten Verteilungsraum (4) zum Transportieren des Saatguts (2) zu den Förderleitungen (5) mittels Luftstrom (11A, 11). Der Verteilungsraum (4) ist nach unten hin von einem dem Fallrohr (8) gegenüberliegenden Prallboden (9) und einem sich um den Prallboden (1, 28, 9) zu den Förderleitungen (5) hin erstreckenden Leitboden (10, 29) zum Leiten des Saatguts (2) und des Luftstroms begrenzt. Dadurch, dass ferner eine das Fallrohr (8) umgebende Luftleiteinrichtung (13) zum Einleiten des Luftstroms und der Überdruck in Richtung auf den Prallboden (1, 28, 9) vorhanden ist, lässt sich das Saatgut (2) sowohl als eine im Fallrohr (8) stehende Saatgutsäule (2A) bereitstellen als auch aus einem Zentraldosierer (23) in das Fallrohr (8) rieselnder Saatgutstrom. Entsprechend kann das Saatgut (2) sowohl im Betrieb als Nursing-System als auch im Betrieb als volumetrischer Zentraldosierer (23) flexibel und mit hoher Genauigkeit der Querverteilung eingesetzt werden

## Beschreibung

Die Erfindung betrifft ein System zum Verteilen von Saatgut aus einem zentralen Vorratsbehälter einer Sämaschine auf dezentralen Säaggregaten zugeordnete Förderleitungen.

Bekanntermaßen kann Saatgut, beispielsweise bestehend aus Getreidekörnern, dezentral in Säaggregaten für die zugeordneten Säschare dosiert und vereinzelt werden. Die zentrale Saatgutversorgung arbeitet dann als Nursing-System, so dass das Saatgut je nach Bedarf der Säaggregate zentral verteilt und in deren Vorratsbehälter pneumatisch gefördert wird. Üblicherweise erfolgt die Regelung des Luftstroms dezentral, beispielsweise indem ein eingangsseitiges Luftgitter der Vorratsbehälter bei vollständiger Füllung vom Saatgut verschlossen und der Förderluftstrom auf diese Weise unterbrochen wird. Die Säaggregate sorgen auf diese Weise für eine geeignete Vereinzelung und Dosierung des Saatguts und folglich auch für eine geeignete Querverteilung des ausgebrachten Saatguts.

Es gibt jedoch Saatgut, das sich für eine dezentrale Vereinzelung nur bedingt eignet, da in den Vereinzelungsscheiben der Säaggregate Fehlstellen und/oder Doppelbelegungen auftreten können. Grund dafür ist beispielsweise eine Mischung unterschiedlicher Korng rößen, die Qualität des Saatguts oder dergleichen. Problematisch sind auch besonders kleine Ausbringmengen, wie sie bei Zwischenfrucht- oder Greening-Saatgutmischungen vorkommen, da dann beim Abdrehen sehr kleine Mengen abgewogen werden müssen. Zudem lässt sich im volumetrischen Dosierungsmodus die Gesamtausbringmenge nur abschätzen, da Abdrehproben an sämtlichen dezentralen Säaggregaten nicht praktikabel sind.

Es besteht daher zunehmend der Bedarf, Sämaschinen für unterschiedliche Anforderungen, die beispielsweise oben genannt sind, flexibler zu betreiben, insbesondere sowohl als Nursing-System mit dezentraler Vereinzelung und Dosierung als auch in einem volumetrischen Dosierungsmodus, ohne dafür das Maschinensystem grundlegend umrüsten zu müssen.

Die gestellte Aufgabe wird mit einem System gemäß Anspruch 1 gelöst. Demnach dient dieses zum Verteilen von Saatgut aus einem zentralen Vorratsbehälter einer Sämaschine auf Förderleitungen, die jeweils dezentralen Säaggregaten zugeordnet sind. Das System umfasst ein Fallrohr zum Zuführen des im Vorratsbehälter vorgehaltenen Saatguts. Ferner umfasst das System einen dem Fallrohr nachgeschalteten Verteilungsraum zum Transportieren des Saatguts zu den Förderleitungen mittels Luftstrom. Der Verteilungsraum umfasst einen dem Fallrohr gegenüberliegenden Prallboden und einen sich um den Prallboden zu den Förderleitungen hin erstreckenden Leitboden. Der Leitboden ist zum Leiten des Saatguts und des Luftstroms von einem Bereich des Prallbodens zu den Förderleitungen hin ausgebildet. Ferner umfasst das System eine das Fallrohr umgebende Luftleiteinrichtung zum Anströmen des Prallbodens mit einem Luftstrom und insbesondere von Saatgut in einem äußeren Bereich des Prallbodens und/oder in einem daran anschließenden Bereich des Leitbodens.

Die Luftleiteinrichtung kann aus einem Ringkanal bestehen und/oder aus mehreren ringförmig um das Fallrohr angeordneten Kanälen. Die Luftleiteinrichtung ist insbesondere derart ausgebildet, dass der Luftstrom nicht durch eine im Fallrohr ausgebildete Saatgutsäule geleitet wird sondern außerhalb des Fallrohrs an die Basis der Saatgutsäule. Die Basis kann sich in einem Spalt zwischen Fallrohr und Prallboden ausbreiten, ähnlich einem Schüttgutkegel.

Somit kann das Saatgut im Fallrohr als Saatgutsäule bereitgestellt und an deren Basis vom Luftstrom mitgerissen werden, so dass es entlang des Leitbodens zu den Förderleitungen transportiert wird. Das Saatgut kann aber auch aus einem Dosierungsaggregat insbesondere kontinuierlich in das Fallrohr dosiert werden und darin herunter fallen und/oder rieseln. Auch in diesem Fall wird das Saatgut unterhalb des Fallrohrs vom Luftstrom mitgerissen und in Richtung der Förderleitungen transportiert.

Mit der Saatgutsäule arbeitet das System als Nursing-System für eine dezentrale Dosierung und Vereinzelung, mit dem Dosierungsaggregat und dem herunter fallendem / rieselnden Saatgut dagegen als volumetrische Zentraldosierung.

Bei beiden Betriebsweisen ermöglicht die Luftleiteinrichtung einen beispielsweise koaxialen Luftstrom an der Außenseite des Fallrohrs, der für den Transport des Saatguts durch das Fallrohr keine oder eine nur untergeordnete Rolle spielt, jedoch das Saatgut unterhalb des Fallrohrs effektiv aufwirbelt und mitreißt und dadurch einen gleichmäßigen pneumatischen Transport des Saatguts entlang des Leitbodens zu allen Förderleitungen unterstützt.

Für eine Umstellung des Systems von Nursing-Betrieb auf volumetrische Zentraldosierung sind keine oder nur geringe Montagearbeiten am pneumatischen System nötig. Dies vereinfacht die Umstellung zwischen den oben genannten Betriebsweisen.

Vorzugsweise ist der Leitboden trichterförmig ansteigend um den Prallboden herum ausgebildet. Dies begünstigt einen gleichmäßigen Abtransport des Saatguts von der Basis einer im Bereich des Fallrohrs vorhandenen Saatgutsäule in Richtung auf die Förderleitungen. Am unteren Ende des Fallrohrs kann sich die Basis in Form eines Schüttkegelrands ausbilden, um die einzelnen Saatgutkörner dort aufzuwirbeln und pneumatisch abzutransportieren.

Prallboden und Leitboden bilden zusammen einen insbesondere tellerförmigen Boden des Verteilungsraums aus. Prallboden und Leitboden können aus einem Stück gefertigt sein.

Vorzugsweise beträgt der mittlere Abstand zwischen dem Fallrohr und dem Prallboden 1 bis 5 cm. Somit ist zwischen dem Fallrohr und dem Prallboden wenigstens ein umfänglich verlaufender Spalt vorhanden, durch den das Saatgut vom Bereich des Prallbodens in Richtung des Leitbodens rieseln kann und/oder an dem das Saatgut vom Luftstrom aufgewirbelt und mitgerissen wird.

Insbesondere ist der Abstand zwischen dem Fallrohr und dem Prallboden verstellbar. Ein verstellbarer Spalt zwischen Fallrohr und Prallboden ermöglicht eine Anpassung an unterschiedliches Saatgut und/oder eine optimierte Umstellung der Betriebsweise zwischen Nursing-System und volumetrische Zentraldosierung.

Vorzugsweise sind der Prallboden und der Leitboden motorisch und insbesondere koaxial zum Fallrohr drehbar ausgebildet. Prallboden und Leitboden bilden dann ein drehbares Bodenelement aus. Der Antrieb erfolgt beispielsweise mittels Elektromotor oder Hydraulikmotor.

Die Drehung begünstigt eine gleichmäßigere Verteilung des Saatguts auf alle Förderleitungen insbesondere bei asymmetrischer Verteilung des Saatguts auf dem Prallboden, beispielsweise aufgrund einer Systemneigung bei einer Hangfahrt.

Zudem ist eine gleichmäßigere Verteilung auf die Förderleitungen möglich, wenn diese ungleichmäßige Strömungswiderstände zu den einzelnen Säaggregaten aufweisen und daher unterschiedliche Druckverhältnisse am Eingang der Förderleitungen herrschen. Dies ist besonders nützlich bei volumetrischer Zentraldosierung, um das Saatgut auf die einzelnen Förderleitungen und daran angeschlossenen Säaggregate möglichst gleichmäßig zu verteilen.

Vorzugsweise umfasst der Leitboden dann Mitnehmer zum Mitnehmen des Saatguts in Drehrichtung des Leitbodens. Bei sich drehendem Leitboden rutscht das Saatgut dann aufgrund der einwirkenden Zentrifugalkräfte und des Luftstroms nach außen entlang der Mitnehmer und wird auf diese Weise in die Eingänge der Förderleitungen geschleudert. Zu diesem Zweck schließen die Eingänge der Förderleitungen vorzugsweise bündig und/oder tangential an den Leitboden an. Somit lässt sich Saatguts effizient und gleichmäßig vom Leitboden in die Förderleitungen schleudern.

Vorzugsweise umfasst die Lufteinrichtung wenigstens einen Anströmkanal, der zwischen dem Fallrohr und einem zugehörigen Mantelrohr ausgebildet ist. Der Luftstrom lässt sich dann im Wesentlichen koaxial außen am Fallrohr entlang führen, so dass am unteren Ende des Fallrohrs aufgeschüttetes Saatgut vollumfänglich aufgewirbelt und vom Luftstrom zu den Förderleitungen hin mitgerissen wird.

Vorzugsweise umfasst die Lufteinrichtung ferner einen das Mantelrohr umgebenden Druckraum mit Öffnungen, insbesondere Düsen, zum pneumatischen Anströmen des Leitbodens und/oder eines äußeren Bereichs des Prallbodens. Saatgut, das vom Luftstrom aus dem Anströmkanal aufgewirbelt wird, kann dann durch einen weiteren Luftstrom mitgerissen und in der Summe beider Luftströme durch die Förderleitungen transportiert werden.

Vereinfacht gesprochen wird mit Hilfe des Druckraums primär ein für den pneumatischen Transport des Saatguts ausreichender Volumenstrom erzeugt und mit dem zwischen Mantelrohr und Fallrohr ausgebildeten Anströmkanal primär ein zielgerichteter Luftstrom zum umfänglich gleichmäßigen Aufwirbeln des Saatguts im äußeren Bereich des Prallbodens.

Das System umfasst vorzugsweise ferner ein Gebläse zum Versorgen der Luftleiteinrichtung mit der Luftströmung, insbesondere mittels getrennter Versorgungsleitungen für den Anströmkanal zwischen Fallrohr und Mantelrohr und den Druckraum. Hierbei weist die Versorgungsleitung für den Druckraum einen größeren Querschnitt auf als die Versorgungsleitung für den Anströmkanal. Somit wird mit dem Gebläse sowohl ein das Saatgut transportierender Förderluftstrom erzeugt als auch ein Anblasluftstrom für Saatgut im äußeren Bereich des Prallbodens.

Vorzugsweise ist dem Fallrohr ein Zentraldosierer oder eine Dosierwalze für das Saatgut vorgeschaltet. Dadurch kann das System als volumetrische Zentraldosierung betrieben werden, insbesondere für Saatgut, das für eine dezentrale Vereinzelung ungeeignet ist, und/oder für vergleichsweise geringe Ausbringmengen.

Vorzugsweise ist dann ferner ein Rohrstück zum Ersatz oder zur gezielten Umgehung des Zentraldosierers bzw. der Dosierwalze vorhanden. Damit lässt sich das System auf einfache Weise von volumetrischer Zentraldosierung auf Nursing-Betrieb umrüsten oder umschalten.

Vorzugsweise sind am äußeren Rand des Verteilungsraums Ausgänge zu den Förderleitungen in umfänglich gleichmäßiger Verteilung angeordnet. Dies vereinfacht eine gleichmäßige Verteilung des Saatguts auf die einzelnen Förderleitungen insbesondere bei volumetrischer Zentraldosierung. Dies ist besonders vorteilhaft im Zusammenhang mit einem drehbaren Bodenelement umfassend den Prallboden und den Leitboden.

Vorzugsweise sind die Förderleitungen ausgangsseitig an je ein zur dezentralen Dosierung und/oder Vereinzelung ausgebildetes Säaggregat angeschlossen. Das Säaggregat ist dann vorzugsweise derart umschaltbar ausgebildet, dass es vom Vereinzelungsbetrieb in einen Gleichmäßigungsbetrieb umgeschaltet werden kann. Unter letzterem ist zu verstehen, dass ein aus den Förderleitungen gegebenenfalls schubweise gelieferter Saatgutstrom als im Wesentlichen kontinuierlicher Saatgutstrom an die zugeordneten Säschare übergeben wird.

Vorzugsweise umfasst das System dann ferner Umgehungsleitungen für die Säaggregate, die mittels Klappen/Ventilen verschließbar sind. Damit kann die Dosierungsfunktion / Vereinzelungsfunktion der Säaggregate für die volumetrische Zentraldosierung gezielt umgangen werden. Es ist dann keine dezentrale Umrüstung, beispielsweise von Vereinzelungsscheiben, an den zahlreichen Säaggregaten nötig.

Vorzugsweise ist im Fallrohr eine den Querschnitt des Fallrohrs verengende Beschleunigerdüse für das Saatgut ausgebildet. Die Beschleunigerdüse erfasst aus einem Zentraldosierer rieselndes Saatgut und beschleunigt dieses unter gleichmäßiger Verwirbelung in Richtung auf den Prallboden. Dort wird das auftreffende Saatgut von der aus dem Druckraum und dem Anströmkanal strömenden Luft zusätzlich erfasst, dabei verwirbelt und gleichmäßig entlang des Leitbodens auf die Förderleitungen verteilt.

Die gestellte Aufgabe wird ebenso mit einer Sämaschine gelöst, die wenigstens einen zentralen Vorratsbehälter für das Saatgut umfasst, mehrere in Querreihe angeordnete Säschare mit dezentralen Säaggregaten sowie das System gemäß wenigstens einer der oben beschriebenen Ausführungsformen.

Bevorzugte Ausführungsformen der Erfindung sind zeichnerisch dargestellt. Es zeigen:
Fig. 1 einen schematischen Längsschnitt durch eine erste bevorzugte Ausführungsform;
Fig. 2 einen schematischen Längsschnitt durch eine zweite bevorzugte Ausführungsform; und
Fig. 3 eine Variante der zweiten Ausführungsform.

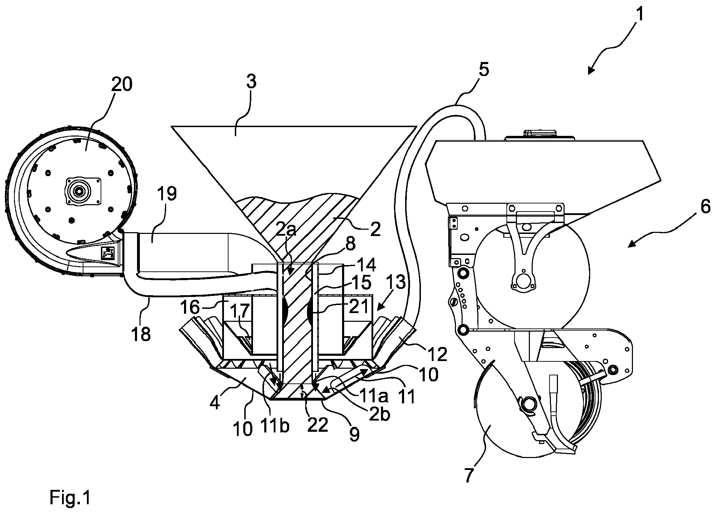

Wie die Fig. 1 erkennen lässt, arbeitet das System 1 zum Verteilen von Saatgut 2 aus einem zentralen Vorratsbehälter 3 gemäß der ersten bevorzugten Ausführungsform als Nursing-System, welches das Saatgut 2 durch einen zentralen Verteilungsraum 4 und eine Vielzahl von Förderleitungen 5 pneumatisch zu Säaggregaten 6 im Bereich von in Querreihe angeordneten Säscharen 7 (jeweils nur einmal dargestellt) fördert. Das Saatgut 2 wird bei dieser Betriebsweise in den Säaggregaten 6 dezentral vereinzelt und dosiert.

Zwischen dem Saatgutbehälter 3 und dem Verteilungsraum 4 ist ein Fallrohr 8 ausgebildet, in dem das Saatgut 2 nach unten gegen einen dem Fallrohr 8 gegenüberliegenden Prallboden 9 geführt wird. An den Prallboden 9 schließt umfänglich ein Leitboden 10 an, der eine Luftströmung 11 und das von ihr mitgerissene Saatgut 2 nach außen hin zu den Förderleitungen 5 leitet.

Der Leitboden 10 ist vorzugsweise trichterförmig nach außen hin ansteigend ausgebildet und schließt vorzugsweise bündig an den Prallboden 9 an. Vorzugsweise sind der Prallboden 9 und der Leitboden 10 aus einem Stück gefertigt. Vorzugsweise bilden der Prallboden 9 und der Leitboden 10 gemeinsam einen tellerförmigen Boden des Verteilungsraums 4 aus.

Vorzugsweise schließt der Leitboden 10 bündig an Ausgänge 12 zu den einzelnen Förderleitungen 5 an. Dadurch kann der Luftstrom 11 und das von ihm mitgerissene Saatgut 2 gleichmäßig und ungehindert in die Ausgänge 12 und Förderleitungen 5 einströmen.

Die Ausgänge 12 zu den Förderleitungen 5 sind vorzugsweise in umfänglich gleichmäßiger Anordnung am äußeren Rand des Leitbodens 10 stationär angeordnet.

Im Betrieb als Nursing-System bildet das Saatgut 2 eine Saatgutsäule 2a im Fallrohr 8 aus und im Bereich unterhalb des Fallrohrs 8 einen Saatgutkegelrand 2b, der als Verbreiterung der Basis der Saatgutsäule 2a zu verstehen ist und einen äußeren Bereich des Prallbodens 9 bedeckt. Der Saatgutkegelrand 2b kann beispielsweise bis in einen Übergangsbereich zum nach außen ansteigenden Leitboden 10 reichen.

Der Luftstrom 11 umfasst vorzugsweise einen ersten Luftstrom 11a zum Anströmen und Aufwirbeln des Saatguts 2 im Bereich des Saatgutkegelrands 2b und einem zweiten Luftstrom 11b zum Transportieren des aufgewirbelten Saatguts 2 zu den und durch die Förderleitungen 5.

Der Luftstrom 11 wird mittels einer um das Fallrohr 8 herum ausgebildeten Luftleiteinrichtung 13 in den Verteilungsraum 4 geleitet. Vorzugsweise umfasst die Luftleiteinrichtung 13 wenigstens einen zwischen dem Fallrohr 8 und einem umgebenden Mantelrohr 14 ausgebildeten Anströmkanal 15 für den ersten Luftstrom 11a sowie einen um den Anströmkanal 15 herum ausgebildeten Druckraum 16 mit umfänglich verteilten Austrittsöffnungen 17, Düsen oder dergleichen für den zweiten Luftstrom 11b.

Zwischen Fallrohr 8 und Mantelrohr 14 könnten stabilisierende Längsstege oder dergleichen Wände ausgebildet sein, die den Anströmkanal 15 umfänglich segmentieren (nicht dargestellt). Anstelle des Mantelrohrs 14 könnten auch mehrere Anströmkanäle für den ersten Luftstrom 11a in Form separater Rohre oder dergleichen um das Fallrohr 8 herum angeordnet sein, solange das Saatgut 2 damit im Bereich des Saatgutkegelrands 2b angeströmt und aufgewirbelt werden kann.

Der Anströmkanal 15 ist über eine erste Versorgungsleitung 18 und der Druckraum 16 über eine zweite Versorgungsleitung 19 an ein Gebläse 20 angeschlossen. Hierbei hat die zweite Versorgungsleitung 19 einen größeren Querschnitt als die erste Versorgungsleitung 18, um einen ausreichend großen Volumenstrom für den pneumatischen Transport des Saatguts 2 zu den und durch die Förderleitungen 5 bereitzustellen. Demgegenüber wird ein geringerer Volumenstrom durch den Anströmkanal 15 benötigt, um das Saatgut 2 im Bereich des Saatgutkegelrands 2b aufzuwirbeln.

Im Nursing-Betrieb bedeckt die Saatgutsäule 2a einen zentralen Bereich des Prallbodens 9, so dass das Saatgut 2 im Wesentlichen nur im Bereich des Saatgutkegelrands 2b vom ersten Luftstrom 11a aufgewirbelt und zusammen mit dem zweiten Luftstrom 11b abtransportiert wird. Die Saatgutsäule 2a rieselt dann entsprechend nach.

Der Vollständigkeit halber dargestellt ist eine im Fallrohr 8 ausgebildete Beschleunigerdüse 21, die im Nursing-Betrieb bei langsam nachrieselnder Saatgutsäule 2a keine Funktion hat. Die Beschleunigerdüse 21 ist nach einer Umrüstung oder Umschaltung des Systems 1 bei volumetrischer Zentraldosierung wirksam, die anhand der zweiten bevorzugten Ausführungsform beschrieben wird.

Zwischen dem Prallboden 9 und dem Fallrohr 8 ist vorzugsweise ein Abstand 22 von 2-10 cm ausgebildet. Der Abstand 22 kann zudem verstellbar sein, beispielsweise durch teleskopartiges Ausfahren / Einfahren des unteren Endes des Fallrohrs 8. Dadurch lässt sich die Austrittsgeschwindigkeit des Saatguts 2 aus dem Fallrohr 8 und/oder die Form des Saatgutkegelrands 2b je nach Korngröße / Qualität des Saatguts 2 und/oder benötigter Fördermenge anpassen.

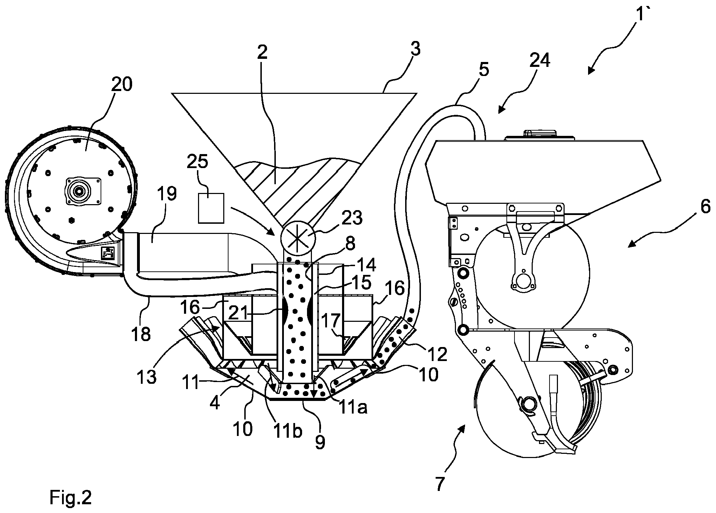

Die Fig. 2 verdeutlicht das System 1' zum Verteilen von Saatgut 2 aus einem zentralen Vorratsbehälter 3 gemäß der zweiten bevorzugten Ausführungsform beim Betrieb als volumetrische Zentraldosierung und Zentralverteilung. Gegenüber der ersten Ausführungsform und dem Nursing-Betrieb 1 müssen lediglich zwei Veränderungen vorgenommen werden.

Zum Einen ist beim System 1' und dem Betrieb als volumetrische Zentraldosierung und Zentralverteilung zwischen dem Saatgutbehälter 3 und dem Fallrohr 8 ein Zentraldosierer 23 zwischengeschaltet. Dieser lässt das Saatgut 2 als kontrolliert steuerbarer Gesamtmassen-und/oder Gesamtvolumenstrom in das Fallrohr 8 rieseln.

Das Saatgut 2 wird dann von der Beschleunigerdüse 21 erfasst, beschleunigt und gleichmäßig verwirbelt. Das auf den Prallboden 9 treffende Saatgut 2 wird im Verteilungsraum 4 vom ersten Luftstrom 11a erfasst, weiter verwirbelt und vom zweiten Luftstrom 11b zum Luftstrom 11 für den anschließenden Lufttransport durch die Förderleitungen 5 ergänzt.

Der Leitboden 10 und die umfänglich gleichmäßig verteilten Ausgänge 12 ermöglichen eine prinzipiell gleichmäßige Verteilung des Saatguts 2 auf die einzelnen Förderleitungen 5.

Da das Saatgut 2 beim System 1' zentral mit dem Zentraldosierer 23 dosiert wird, besteht die zweite Änderung gegenüber dem System 1 und dem Nursing-Betrieb in einer Umgehung der Säaggregate 6 oder der an diesen ausgebildeten Vereinzelungsscheiben. Zu diesem Zweck ist beispielsweise eine Umgehungsleitung 24 vorhanden. Das Saatgut 2 wird dann dezentral nicht vereinzelt, um Dosierungsfehler aufgrund einer unzuverlässigen Vereinzelung bei bestimmten Mischungen / Qualitäten des Saatguts 2 zu vermeiden. Allerdings ist es dennoch möglich, die Fließgeschwindigkeit des Saatguts 2 durch die einzelnen Säaggregate 6 an den vom Zentraldosierer 23 zugeführten Volumenstrom / Massenstrom des Saatguts 2 gesteuert anzupassen. Das heißt, die Umgehungsleitung 24 ist nicht zwingend erforderlich. Stattdessen könnten die Säaggregate 6 umgerüstet / umgeschaltet werden, so dass das ihnen zugeführte Saatgut 2 nicht vereinzelt sondern lediglich als gleichmäßiger / kontinuierlicher Saatgutstrom ausgebracht wird.

Durch Vergleich der Fig. 1 und 2 kann man erkennen, dass ein Wechsel vom Betrieb als Nursing-System zum Betrieb als volumetrischer Zentraldosierer und Zentralverteiler und umgekehrt mit nur geringen Umrüstarbeiten und/oder durch Umschalten schnell und unkompliziert möglich ist.

Beispielsweise könnte die Dosierwalze entnommen der Zentraldosierer 23 durchlässig betrieben werden. Alternativ kann der Zentraldosierer 23 durch ein geeignetes Rohrstück 25 ersetzt werden. Ebenso wäre es denkbar die Umgehungsleitung 24 mit einer Klappe, Weiche oder dergleichen in/außer Betrieb zu nehmen.

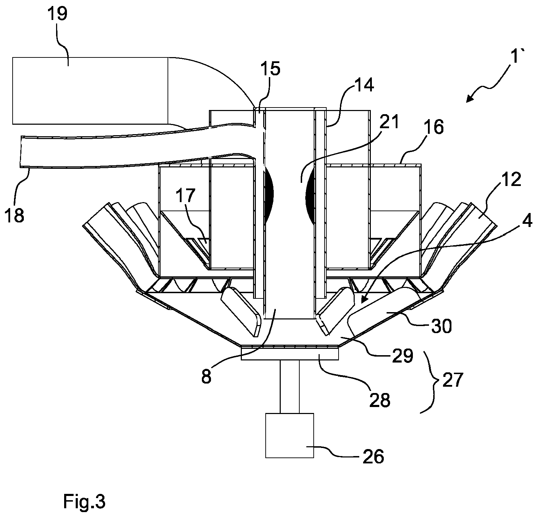

Die Fig. 3 verdeutlicht eine bevorzugte Ausgestaltung des Bodens des Verteilungsraums 4 für einen Betrieb als volumetrischer Zentraldosierer und Zentralverteiler.

Demnach ist ein Motor 26 mit einem drehbaren Bodenelement 27 umfassend den Prallboden 28 und den diesen umgebenden Leitboden 29. Der Motor 26 kann beispielsweise ein Elektromotor sein oder ein Hydraulikmotor. Durch motorische Drehung des Bodenelements 27 wird das zentral im Bereich des Prallbodens 28 auftreffende Saatgut 2 gleichmäßiger auf die einzelnen Ausgänge 12 verteilt.

Dies ist beispielsweise dann vorteilhaft, wenn die zugeordnete Sämaschine eine Hangfahrt ausführt und das System 1' eine entsprechende Neigung aufweist.

Ebenso könnten aufgrund unterschiedlicher Schlauchlängen, unterschiedlicher Verläufe der Förderleitungen 5 Druckunterschiede in den einzelnen Förderleitungen 5 entstehen. Im Verteilungsraum 4 könnte es dann bei feststehendem Prallboden 9 und Leitboden 10 zu einer ungleichmäßigen Verteilung des Saatguts 2 auf die einzelnen Ausgänge 12 kommen. Dem kann durch kontinuierliches Drehen des Bodenelements 27, also des Prallbodens 28 und des Leitbodens 29, um sich selbst entgegengewirkt werden.

Somit lässt sich auch bei einer volumetrischen Zentraldosierung eine gleichmäßige Verteilung des Saatguts auf die Förderleitungen 5 und somit eine gleichmäßige Querverteilung des Saatguts 2 bewirken.

Vorteilhaft sind zudem in der Fig. 3 angedeutete Mitnehmer 30, die insbesondere im Bereich des Leitbodens 29 ausgebildet sein können. Die Mitnehmer 30 nehmen das Saatgut 2 in Drehrichtung mit und führen das Saatgut 2 unter Einwirkung der dabei verursachten Zentrifugalkraft nach außen in Richtung auf die Ausgänge 12.

In Fig. 3 ist ferner zu erkennen, dass der Leitboden 29 vorzugsweise bündig und/oder tangential an die Ausgänge 12 zu den einzelnen Förderleitungen 5 anschließt, so dass das Saatgut 2 am dortigen Übergang nicht an Stufen, Aussparungen oder dergleichen hängen bleiben kann.

Aufgrund des mittigen Auftreffens des Saatguts 2 auf dem Prallboden 28 verbleibt das Saatgut 2 in der Regel wenigstens für eine volle Drehung im Bereich des Bodenelements 27, woraus eine gleichmäßige Verteilung des Saatguts 2 auf sämtliche Ausgänge 12 zu den Förderleitungen 5 resultiert.

Mit dem System 1, 1' lässt sich Saatgut 2 unterschiedlicher Qualität und insbesondere solches, das sich für eine Vereinzelung in den dezentralen Säaggregaten 6 nur bedingt oder gar nicht eignet, mit guter Querverteilung und bei gegebenenfalls geforderten geringen Ausbringmengen auf die Förderleitungen 5 und die Schare 7 verteilen.

Beim System 1, 1' handelt sich prinzipiell um ein Nursing-System, das auf einfache Weise für das Ausbringen problematischen Saatguts oder problematischer Ausbringmengen auf volumetrische Zentraldosierung und Zentralverteilung umgestellt und/oder umgerüstet werden kann. Hierfür sind im Wesentlichen lediglich Änderungen im Bereich des Zentraldosierers 23 und/oder im Bereich der dezentralen Säaggregate 6 nötigt. Dies ist sowohl mittels wahlweise einsetzbarer Rohrstücke möglich als auch durch Verschließen bzw. Umgehen von Leitungen oder Dosierorganen mittels Klappen, Ventilen oder dergleichen.

Die pneumatische Förderung des Saatguts 2 kann ansonsten auf an sich bekannte Weise mit Hilfe eines zentralen Gebläses 20 erfolgen.

Der Verteilungsraum 4 und insbesondere sein Bodenbereich mit dem Prallboden 9, 28 und dem Leitboden 10, 29 lässt sich flexibel an bestimmtes Saatgut 2 und/oder bestimmte Ausbringmengen anpassen. Hierbei ist die gezeigte Formgebung des Prallbodens 9, 28 und des Leitbodens 10, 29 lediglich beispielhaft.

Vorteilhaft ist eine Konfiguration, die insgesamt als Hohlkegelstumpf mit fluchtenden Übergängen zwischen dem Prallboden 9, 28, dem Leitboden 10, 29 und den Ausgängen 12 ausgebildet ist.

Es ist selbstverständlich möglich, einen um sich selbst drehbaren Prallboden 29 und einen entsprechend um sich selbst drehbaren Leitboden 30 bei stehendem Motor 26 uneingeschränkt für einen Betrieb als Nursing-System zu verwenden. Auch wäre eine zusätzliche Drehung im Betrieb als Nursing-System, gegebenenfalls mit vergleichsweise geringer Drehzahl, zur Unterstützung einer gleichmäßigen Verteilung des Saatgutkegelrands 2b denkbar.

## Patentansprüche

1. System (1, 1') zum Verteilen von Saatgut (2) aus einem zentralen Vorratsbehälter (3) einer Sämaschine auf dezentralen Säaggregaten (6) zugeordnete Förderleitungen (5), mit einem Fallrohr (8) zum Zuführen des im Vorratsbehälter (3) vorgehaltenen Saatguts (2), mit einem dem Fallrohr (8) nachgeschalteten Verteilungsraum (4) zum pneumatischen Verteilen des Saatguts (2) auf die Förderleitungen (5), wobei der Verteilungsraum (4) einen dem Fallrohr (8) gegenüberliegenden Prallboden (9, 28) und einen sich um den Prallboden (9, 28) zu den Förderleitungen (5) hin erstreckenden Leitboden (10, 29) für das Saatgut (2) umfasst, und mit einer das Fallrohr (8) umgebenden Luftleiteinrichtung (13) zum Anströmen des Saatguts (2) im Bereich des Prallbodens (8) mit einem Luftstrom (11a).

2. System nach Anspruch 1, wobei der Leitboden (10, 29) trichterförmig ansteigend um den Prallboden (9, 28) herum ausgebildet ist.

3. System nach Anspruch 1 oder 2, wobei das Fallrohr (8) in einem Abstand (22) von 2-10 cm zum Prallboden (9, 28) angeordnet und der Abstand (22) insbesondere verstellbar ist.

4. System nach einem der vorigen Ansprüche, wobei der Prallboden (28) und der Leitboden (29) motorisch und insbesondere koaxial zum Fallrohr (8) drehbar ausgebildet sind.

5. System nach Anspruch 4, wobei der Leitboden (29) Mitnehmer (30) zum Mitnehmen des Saatguts (2) in Drehrichtung des Leitbodens (29) umfasst.

6. System nach einem der vorigen Ansprüche, wobei die Luftleiteinrichtung (13) wenigstens einen Anströmkanal (15) umfasst, der zwischen dem Fallrohr (8) und einem zugehörigen Mantelrohr (14) ausgebildet ist.

7. System nach Anspruch 6, wobei die Luftleiteinrichtung (13) ferner einen das Mantelrohr (14) umgebenden Druckraum (16) mit Austrittsöffnungen (17) zum Anströmen des Leitbodens (10) mit einem weiteren Luftstrom (11b) umfasst.

8. System nach einem der vorigen Ansprüche, ferner mit einem an die Luftleiteinrichtung (13) angeschlossenen Gebläse (20), insbesondere gemäß Anspruch 6 und 7 mittels getrennter Versorgungsleitungen (18, 19) für den Anströmkanal (15) und den Druckraum (16).

9. System nach einem der vorigen Ansprüche, wobei dem Fallrohr (8) ein Zentraldosierer (23) oder eine Dosierwalze für das Saatgut (2) vorgeschaltet ist.

10. System nach Anspruch 9, ferner mit einem Rohrstück (25) zum Ersatz oder zur gezielten Umgehung des Zentraldosierers (23) / der Dosierwalze.

11. System nach einem der vorigen Ansprüche, wobei am äußeren Rand des Verteilungsraums (4) Ausgänge (12) zu den Förderleitungen (5) in umfänglich gleichmäßiger Verteilung angeordnet sind.

12. System nach einem der vorigen Ansprüche, wobei die Förderleitungen (5) ausgangsseitig an Säaggregate (6) zur Vereinzelung des Saatguts (2) angeschlossen sind.

13. System nach Anspruch 12, wobei ferner mittels Klappen / Ventilen verschließbare Umgehungsleitungen (24) für die Säaggregate (6) vorhanden sind.

14. System nach einem der vorigen Ansprüche, wobei im Fallrohr (8) eine Querschnitt verengende Beschleunigerdüse (21) für das Saatgut (2) ausgebildet ist.

15. Sämaschine umfassend wenigstens einen zentralen Vorratsbehälter (3) für das Saatgut (2) und mehrere in Querreihe angeordnete Säschare (7) mit dezentralen Säaggregaten (6), sowie mit dem System (1, 1') nach wenigstens einem der vorigen Ansprüche.
